# EUROPÄISCHE PATENTSCHRIFT

(11) **EP 2 576 270 B1**
(45) Veröffentlichungstag und Bekanntmachung des Hinweises auf die Patenterteilung: **02.07.2014**
(21) Anmeldenummer: 11714745.4
(22) Anmeldetag: 11.04.2011
(51) Int. Cl.: B60L 3/00, F16D 7/04, F16D 43/20, F16D 11/14

(54) **SICHERHEITSKUPPLUNG FÜR EINEN ELEKTROANTRIEB UND VERWENDUNG DER SICHERHEITSKUPPLUNG IN EINEM RADFAHRZEUG**
SAFETY CLUTCH FOR AN ELECTRIC DRIVE AND USE OF THE SAFETY CLUTCH IN A WHEELED VEHICLE
EMBRAYAGE DE SÉCURITÉ POUR UN ENTRAÎNEMENT ÉLECTRIQUE ET UTILISATION DE L'EMBRAYAGE DE SÉCURITÉ DANS UN VÉHICULE SUR ROUES

(30) Priorität: 27.05.2010 DE 102010021808
(43) Veröffentlichungstag der Anmeldung: 10.04.2013
(73) Patentinhaber: Schaeffler Technologies GmbH & Co. KG, 91074 Herzogenaurach (DE)
(72) Erfinder: BOGNER, Michael, 90542 Eckental (DE); FISCHER, Raphael, 91074 Herzogenaurach (DE)
(86) Internationale Anmeldenummer: PCT/EP2011/055640
(87) Internationale Veröffentlichungsnummer: WO 2011/147634

(56) Entgegenhaltungen:
- EP-A1- 1 900 953
- WO-A1-89/12179
- DE-U1-202009 014 490
- US-A- 4 899 856

## Beschreibung

### Gebiet der Erfindung

Die Erfindung betrifft eine Sicherheitskupplung für einen Elektroantrieb sowie deren Verwendung in einem Radfahrzeug. Insbesondere betrifft die Erfindung eine Sicherheitskupplung, die im Falle eines Kurzschlusses im Elektromotor des Elektroantriebs eine Entkopplung des Elektromotors von der Abtriebsseite ermöglicht.

### Hintergrund der Erfindung

Die deutsche Gebrauchsmusterschrift DE 20 2009 014 490 U1 offenbart ein Antriebssystem für ein nicht schienengebundenes Fahrzeug, welches einen Elektroantrieb umfasst. Dabei ist der Elektroantrieb eine Kombination von wenigstens einem nicht permanenterregten Elektromotor und wenigstens einem Synchronmotor mit Permanenterregung. Letzterem ist abtriebsseitig eine mechanische Entkopplungseinheit nachgeordnet, durch welche der Synchronmotor in einem Fehlerfall von einer anzutreibenden Einheit trennbar ist. Die Entkopplungseinheit ist insbesondere als Freilaufkupplung ausgebildet, die nur Drehmomente einer Richtung auf die anzutreibende Einheit überträgt.

Werden Elektromotoren zum Antrieb einer Maschine eingesetzt, so kann es bei einem Kurzschluss im Elektromotor zum Auftreten von Bremsmomenten auf den Rotor des Elektromotors kommen, welche durch die zunächst vom Motor angetriebene Welle nach der Abtriebsseite hin übertragen werden und wegen des dadurch plötzlich veränderten Verhaltens der Maschine zu Problemen führen können. Handelt es sich bei der Maschine insbesondere um ein Radfahrzeug und wird mit dem Elektromotor wenigstens ein Rad des Radfahrzeugs angetrieben, so wirkt bei einem Kurzschluss im Elektromotor letztlich ein Bremsmoment auf das Rad. Dies beeinträchtigt die Fahrstabilität des Radfahrzeugs und stellt im Hinblick auf die Verkehrssicherheit des Radfahrzeugs ein erhebliches Problem dar. Besonders gravierend ist diese Problematik bei Fahrzeugen, bei denen ein Elektromotor mit Permanentmagneten eingesetzt wird, denn ein Permanentmagnet lässt sich nicht abschalten, d.h. sein Magnetfeld führt zusammen mit den Leiterwicklungen des Motors nach der Lenzschen Regel zu einem von außerhalb des Motors letztlich nicht zu beeinflussenden Bremsmoment auf den Rotor.

Eine Gegenmaßnahme besteht darin, den Motor im Kurzschlussfall von der Abtriebsseite abzukoppeln, so dass das auftretende Bremsmoment nicht nach der Abtriebsseite hin übertragen werden kann, im Falle eines Radfahrzeugs also nicht auf ein Rad einwirken kann. Das zitierte Gebrauchmuster DE 20 2009 014 490 U1 löst dies konkret dadurch, dass die dort verwendeten Synchronmotoren mit Permanentmagneten über Freiläufe auf die Antriebswelle wirken, wobei die Freiläufe Drehmomente in einer unerwünschten Richtung, also ein Bremsmoment, konstruktionsbedingt grundsätzlich nicht übertragen. Ein Nachteil daran ist, dass damit auch in Situationen, in denen ein Drehmoment in die nämliche Richtung erforderlich ist, dieses nicht direkt durch die Synchronmotoren bereitstellbar ist.

Aufgabe der Erfindung ist, eine Sicherheitskupplung für einen Elektroantrieb bereitzustellen, bei der kostengünstig und unkritisch hinsichtlich Bauraum und Gewicht eine kontrollierte Entkopplung des Elektromotors von der Antriebswelle möglich ist.

Diese Aufgabe wird gelöst durch eine Sicherheitskupplung, welche die Merkmale im Anspruch 1 umfasst.

Es ist ferner Aufgabe der Erfindung, eine Sicherheitskupplung für den Elektroantrieb eines Radfahrzeug so auszulegen, dass die Fahrstabilität und Verkehrssicherheit des Radfahrzeugs im Falle eines Kurzschlusses des Elektromotors gewährleistet ist.

Die Aufgabe wird gelöst durch eine Verwendung einer Sicherheitskupplung nach Anspruch 10.

Die erfindungsgegenständliche Sicherheitskupplung stellt eine mechanische Kopplung zwischen einem Elektromotor und einer von diesem antreibbaren Welle in einem Elektroantrieb bereit. Erfindungsgemäß weist die Sicherheitskupplung wenigstens ein Verbindungselement auf, durch welches die mechanische Kopplung zwischen dem Elektromotor und der Welle gegeben ist, das heißt hier durch welches eine Drehmomentübertragung zwischen dem Elektromotor und der Welle bewirkbar ist. Weiterhin erfindungsgemäß ist dem wenigstens einen Verbindungselement eine steuerbare Verriegelung zugeordnet, durch welche eine Unterbrechung der Drehmomentübertragung zwischen dem Elektromotor und der Welle herbeiführbar ist. In Ausführungsformen der Erfindung wird die Unterbrechung der Drehmomentübertragung durch eine Positionsveränderung des wenigstens einen Verbindungselements herbeigeführt. Die Drehmomentübertragung zwischen dem Elektromotor und der vom Elektromotor angetriebenen Welle ist derart realisiert, dass ein rotierendes Element des Elektromotors mit dem wenigstens einen Verbindungselement und dieses mit der Welle jeweils in einem solchen mechanischen Wirkzusammenhang steht, dass eine Drehmomentübertragung bewirkbar ist.

In einer Klasse von Ausführungsformen der Erfindung ist die steuerbare Verriegelung als eine Sperreinrichtung ausgebildet. Die Sperreinrichtung ist dabei zwischen einem gesperrten und einem entsperrten Zustand umschaltbar. Elektromotor, Welle und das mindestens eine Verbindungselement sind dabei so ausgestaltet, dass durch ihre Zusammenwirkung im entsperrten Zustand eine Unterbrechung der Drehmomentübertragung zwischen Elektromotor und Welle herbeiführbar ist, wohingegen im gesperrten Zustand die Drehmomentübertragung zwischen dem Elektromotor und der Welle durch das mindestens eine Verbindungselement gewährleistet ist. Dies geschieht in Ausführungsbeispielen dergestalt, dass durch die Zusammenwirkung des Elektromotors, der Welle und des mindestens einen Verbindungselements eine Kraftkomponente auf das mindestens eine Verbindungselement erzeugt wird, welche für sich eine Positionsveränderung oder Verschiebung des mindestens einen Verbindungselements, beispielsweise in einer Längsrichtung der Welle, bewirken würde. Im entsperrten Zustand wird eine solche Positionsveränderung nicht durch die Sperreinrichtung beschränkt. Durch die Positionsveränderung des mindestens einen Verbindungselements wird, wie oben bereits erwähnt, eine Unterbrechung der Drehmomentübertragung zwischen dem Elektromotor und der Welle bewirkt. Im gesperrten Zustand wird die Positionsveränderung des mindestens einen Verbindungselements durch die Sperreinrichtung verhindert oder zumindest derart beschränkt, dass eine Unterbrechung der Drehmomentübertragung zwischen dem Elektromotor und der Welle nicht erfolgt.

In Ausführungsformen der Sicherheitskupplung ist das zumindest eine Verbindungselement ein Ring, der eine Innenseite und eine Außenseite aufweist. Zumindest in einem Teilbereich der Innenseite des Rings und zumindest in einem Teilbereich der Außenseite des Rings ist jeweils eine Bezahnung ausgebildet. Gleichfalls weisen der Elektromotor und die Welle eine Bezahnung auf. Aufgrund dieser Bezahnungen wirken der Ring, die Welle und der Elektromotor derart zusammen, dass im entsperrten Zustand der Sperreinrichtung eine Unterbrechung der Drehmomentübertragung zwischen dem Elektromotor und der Welle durch eine Verschiebung des Rings bewirkbar ist. In einer konkreteren Ausgestaltung der Sicherheitskupplung ist die Bezahnung auf der Innenseite des Rings und die Bezahnung auf der Außenseite des Rings durch Rippen gebildet, wobei den Rippen auf der Außenseite eine erste Rippenlängsrichtung gemeinsam ist und den Rippen auf der Innenseite eine zweite Rippenlängsrichtung gemeinsam ist, derart, dass die erste Rippenlängsrichtung parallel zu einer Längsrichtung der Welle orientiert ist und die zweite Rippenlängsrichtung schräg zur Längsrichtung der Welle orientiert ist, oder derart, dass die erste Rippenlängsrichtung schräg zur Längsrichtung der Welle orientiert ist und die zweite Rippenlängsrichtung parallel zur Längsrichtung der Welle orientiert ist. Dabei ist entweder die Bezahnung am Elektromotor mit der Bezahnung auf der Außenseite des Rings und die Bezahnung auf der Welle mit der Bezahnung auf der Innenseite des Rings in Eingriff oder die Bezahnung am Elektromotor mit der Bezahnung auf der Innenseite des Rings und die Bezahnung auf der Welle mit der Bezahnung auf der Außenseite des Rings in Eingriff. Die Bezahnungen an Welle und Elektromotor weisen jeweils dementsprechende Orientierungen auf.

In anderen Ausführungsformen der erfindungsgemäßen Sicherheitskupplung sind die Verbindungselemente durch Wälzkörper gegeben. Jeder Wälzkörper steht in Eingriff sowohl mit einer Nut am Elektromotor als auch mit einer Nut an der Welle. Die beiden mit dem jeweiligen Wälzkörper in Eingriff stehenden Nuten schließen einen von Null verschiedenen Winkel ein. Aufgrund dieses Winkels ensteht durch Zusammenwirkung von Elektromotor, Welle und jeweiligem Wälzkörper eine Kraftkomponente auf den jeweiligen Wälzkörper, welche für sich eine Positionsveränderung oder Verschiebung des jeweiligen Wälzkörpers, beispielsweise in einer Längsrichtung der Welle, bewirken würde. Wie oben bereits dargelegt, wird eine solche Verschiebung im gesperrten Zustand der Sperreinrichtung verhindert oder beschränkt, so dass eine Drehmomentübertragung zwischen dem Elektromotor und der Welle bewirkbar ist, wohingegen im entsperrten Zustand durch diese Verschiebung eine Unterbrechung der Drehmomentübertragung zwischen dem Elektromotor und der Welle herbeiführbar ist. In einer Weiterbildung dieser Ausführungsformen sind die Wälzkörper durch einen Käfig gehaltert. Bei den Wälzkörpern kann es sich beispielsweise um Kugeln oder Zylinder handeln. Für den Fachmann ist naheliegend, dass auch weitere Wälzkörperformen zum Einsatz kommen können, wobei die Nuten jeweils ein an die Wälzkörperform angepasstes Profil aufweisen.

In einer anderen Klasse von Ausführungsformen der Erfindung ist die steuerbare Verriegelung ein Aktuator. Durch den Aktuator ist das zumindest eine Verbindungselement derart verschiebbar, dass eine Drehmomentübertragung zwischen dem Elektromotor und der Welle unterbrechbar ist. In manchen derartigen Ausführungsformen ist das zumindest eine Verbindungselement ein Ring, welcher eine Innenseite und eine Außenseite aufweist. Dabei ist zumindest an einem Teilbereich der Innenseite und zumindest an einem Teilbereich der Außenseite jeweils eine Bezahnung ausgebildet. Ebenso weisen der Elektromotor und die Welle eine Bezahnung auf. Aufgrund der Bezahnungen ist eine Drehmomentübertragung zwischen dem Elektromotor und der Welle über den Ring bewirkbar.

In anderen Ausführungsbeispielen der Erfindung, in denen die steuerbare Verriegelung ein Aktuator ist, sind die Verbindungselemente Wälzkörper. Die Wälzkörper sind bevorzugt in einem Käfig gehaltert. Jeder Wälzkörper steht derart sowohl mit einer Nut an der Welle als auch mit einer Nut am Elektromotor in Eingriff, dass eine Drehmomentübertragung zwischen dem Elektromotor und der Welle bewirkbar ist. Bei den Wälzkörpern kann es sich beispielsweise um Kugeln oder Zylinder handeln. Für den Fachmann ist naheliegend, dass auch weitere Wälzkörperformen zum Einsatz kommen können, wobei die Nuten jeweils ein an die Wälzkörperform angepasstes Profil aufweisen.

Für den Fachmann ist offensichtlich, dass in allen genannten Ausführungsformen eine möglichst geringe Reibung zwischen dem zumindest einen Verbindungselement und der Welle bzw. dem Elektromotor von Vorteil ist, insbesondere um eine zuverlässige Unterbrechung der Drehmomentübertragung zwischen dem Elektromotor und der Welle zu gewährleisten, wenn eine solche Unterbrechung gewünscht ist. Daher ist es naheliegend, eine entsprechende Schmierung und / oder reibungsmindernde Beschichtung der relevanten Kontaktflächen vorzusehen.

Eine Sicherheitskupplung der erfindungsgemäßen Art eignet sich zur Verwendung in einem Elektroantrieb für ein Radfahrzeug. Dabei ist eine Regelung vorgesehen, welche das zwischen Elektromotor und Welle übertragene Drehmoment unter Berücksichtigung eines Fahrzeugzustandes bewertet und bei Feststellung eines Fehlerzustand ein entsprechendes Steuersignal an die Verriegelung sendet, so dass die Drehmomentübertragung zwischen dem Elektromotor und der Welle unterbrochen wird. Der Fahrzeugzustand kann dabei beispielsweise Information darüber umfassen, ob sich das Radfahrzeug vorwärts oder rückwärts bewegt oder ob eine Bremse betätigt worden ist. Ferner kann die Regelung auch weitere Daten, etwa zum Betriebszustand des Elektromotors und seiner Stromversorgung, in die Bewertung einbeziehen.

Im Folgenden sollen Ausführungsbeispiele die Erfindung und ihre Vorteile an Hand der beigefügten Zeichnungen näher erläutern.
- Figur 1: zeigt einen schematischen Längsschnitt einer Ausführungsform der erfindungsgemäßen Sicherheitskupplung, bei der die Verriegelung eine Sperreinrichtung ist.
- Figur 2a: zeigt eine perspektivische Ansicht eines Abschnitts eines abgewickelten Rings.
- Figur 2b: zeigt eine Draufsicht auf einen Abschnitt eines abgewickelten Rings.
- Figur 3: zeigt einen Längsschnitt durch eine Ausführungsform der erfindungsgemäßen Sicherheitskupplung, bei der das Verbindungselement entfernt ist.
- Figur 4: zeigt eine Ausführungsform der erfindungsgemäßen Sicherheitskupplung mit einer alternativen Ausgestaltung des Verbindungselements.
- Figur 5a: zeigt eine Draufsicht auf einen Ausschnitt einer Ausführungsform der erfindungsgemäßen Sicherheitskupplung, bei der die Verbindungselemente Kugeln sind.
- Figur 5b: zeigt einen Querschnitt durch einen Ausschnitt einer Ausführungsform der erfindungsgemäßen Sicherheitskupplung, bei der die Verbindungselemente Kugeln sind.
- Figur 5c: zeigt einen Querschnitt durch einen Ausschnitt einer Ausführungsform der erfindungsgemäßen Sicherheitskupplung, bei der die Verbindungselemente Kugeln sind.
- Figur 6: zeigt einen Längsschnitt einer Ausführungsform der erfindungsgemäßen Sicherheitskupplung, bei der die Verriegelung ein Aktuator ist.
- Figur 7: zeigt einen Querschnitt durch eine Ausführungsform der erfindungsgemäßen Sicherheitskupplung, bei der die Verbindungselemente käfiggeführte Wälzkörper sind.
- Figur 8: zeigt in einem Diagramm den schematischen Zusammenhang zwischen einer Fahrzeuggeschwindigkeit und Bremsmomenten des Elektromotors.

Für gleiche oder gleich wirkende Elemente der Erfindung werden identische Bezugszeichen verwendet. Ferner werden der Übersichtlichkeit halber nur solche Bezugszeichen in den Zeichnungen dargestellt, die zur Erläuterung der jeweiligen Zeichnung oder zur Einordnung der jeweiligen Zeichnung in den Kontext der übrigen Zeichnungen erforderlich sind. Ferner geben die Größenverhältnisse einzelner Elemente in den Zeichnungen zueinander nicht notwendigerweise die tatsächlichen Größenverhältnisse wieder, da die Darstellungen lediglich schematischer Natur sind.

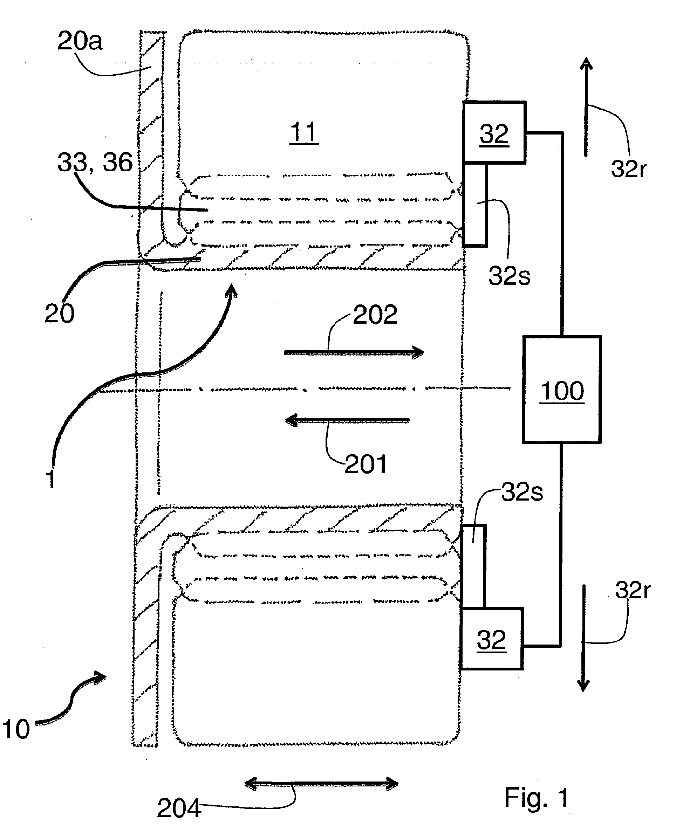

**Figur 1** zeigt einen Längsschnitt einer Ausführungsform der erfindungsgemäßen Sicherheitskupplung 1. Ein Elektromotor 11 ist zum Antrieb einer Welle 20 vorgesehen. Der Elektromotor 11 ist hier als Hohlwelleninnenläufer ausgebildet, dies stellt jedoch keine Beschränkung der Erfindung dar. Ebenso könnte es sich um einen Außenläufer handeln. Weitere Ausführungsformen sind, dass ein Teil einer Rotorwelle des Elektromotors 11 die angetriebene Welle 20 umgreift oder umgekehrt die angetriebene Welle 20 einen Teil der Rotorwelle des Elektromotors 11 umgreift. Diese und weitere Ausgestaltungen der prinzipiellen Kopplung sowie Varianten davon sind dem Fachmann geläufig. Erfindungsgemäß erfolgt die Übertragung eines Drehmoments zwischen dem Elektromotor 11 und der Welle 20 nicht direkt, sondern über ein Verbindungselement 33, 36, welches zwischen Elektromotor 11 und Welle 20 angeordnet ist und mit Elektromotor 11 und Welle 20 in Eingriff ist.

Das Verbindungselement 33, 36 ist in der gezeigten Ausführungsform derart ausgebildet, dass durch die Zusammenwirkung des Verbindungselements 33, 36 mit dem Elektromotor 11 und der Welle 20 eine Kraftkomponente parallel zu einer Längsrichtung 204 der Welle 20 auf das Verbindungselement 33, 36 entsteht. Eine Verschiebung in einer ersten Richtung 201 durch die Kraftkomponente wird in der gezeigten Ausführungsform durch eine feste Beschränkung verhindert, welche hier durch einen Bereich 20a der Welle 20 gebildet ist. Eine Verschiebung in einer zur ersten Richtung 201 entgegengesetzten zweiten Richtung 202 ist in der gezeigten Ausführungsform durch eine Sperrvorrichtung 32 beschränkt. Die Sperrvorrichtung 32 ist im gesperrten Zustand dargestellt, die Verschiebung des Verbindungselements 33, 36 in der zweiten Richtung 202 wird durch Sperrelemente 32s verhindert. Bei den Sperrelementen 32s kann es sich beispielsweise um Stifte handeln, die eine unkontrollierte Verschiebung des Verbindungselements 33, 36 verhindern.

In Varianten der gezeigten Ausführungsform kann eine Verschiebung des Verbindungselements 33, 36 sowohl in der ersten Richtung 201 als auch in der zweiten Richtung 202 durch eine Sperreinrichtung 32 beschränkbar sein. Auch ist es vorstellbar, separat ansteuerbare Sperreinrichtungen vorzusehen, so dass durch eine erste Sperreinrichtung eine Verschiebung des Verbindungselements 33, 36 in der ersten Richtung 201, und durch eine zweite Sperreinrichtung eine Verschiebung des Verbindungselements 33, 36 in der zweiten Richtung 202 beschränkt ist.

Die Sperrvorrichtung 32 ist mit einer Regelung 100 verbunden. Die Regelung 100 überwacht die Drehmomentübertragung zwischen Elektromotor 11 und Welle 20. In der überwiegenden Zahl von Verwendungen der Sicherheitskupplung 1 bezieht die Regelung auch Daten der Vorrichtung, in welcher die Sicherheitskupplung 1 eingesetzt wird, zur Bewertung der Drehmomentübertragung zwischen Elektromotor 11 und Welle 20 heran. Beispielsweise kann die Sicherheitskupplung 1 in einem Elektroantrieb 10 eines Radfahrzeugs verwendet werden. Die Regelung 100 bezieht dann Daten des Fahrzeugzustandes, z.B. ob das Fahrzeug sich rückwärts oder vorwärts bewegt, oder ob z.B. eine Bremse betätigt wurde, in die Bewertung der Drehmomentübertragung zwischen Elektromotor 11 und Welle 20 ein. Ferner kann die Regelung 100 auch Daten zum Betriebszustand des Elektromotors und / oder seiner Stromversorgung in die Bewertung einbeziehen. Erkennt die Regelung 100 dabei einen Fehlerzustand, z.B. weil im Elektromotor 11 ein Kurzschluss auftritt, so sendet sie ein Steuersignal an die Sperrvorrichtung 32, welche dann in einen entsperrten Zustand wechselt. In der dargestellten Ausführungsform geschieht dies beispielsweise dadurch, dass die Sperrelemente 32s in die Richtungen 32r radial nach außen verschoben werden, so dass sie eine Verschiebung des Verbindungselements 33, 36 in der zweiten Richtung 202 nicht mehr beschränken. Das Verbindungselement ist so gestaltet, dass in den von der Regelung 100 berücksichtigten Fehlerzuständen die durch Zusammenwirkung des Verbindungselements 33, 36 mit dem Elektromotor 11 und der Welle 20 entstehende Kraftkomponente in die zweite Richtung 202 gerichtet ist. Im entsperrten Zustand wird das Verbindungselement 33, 36, das durch die Sperrelemente 32s nicht länger beschränkt ist, durch die Kraftkomponente in der zweiten Richtung 202 verschoben, bis die Drehmomentübertragung zwischen dem Elektromotor 11 und der Welle 20 unterbrochen ist.

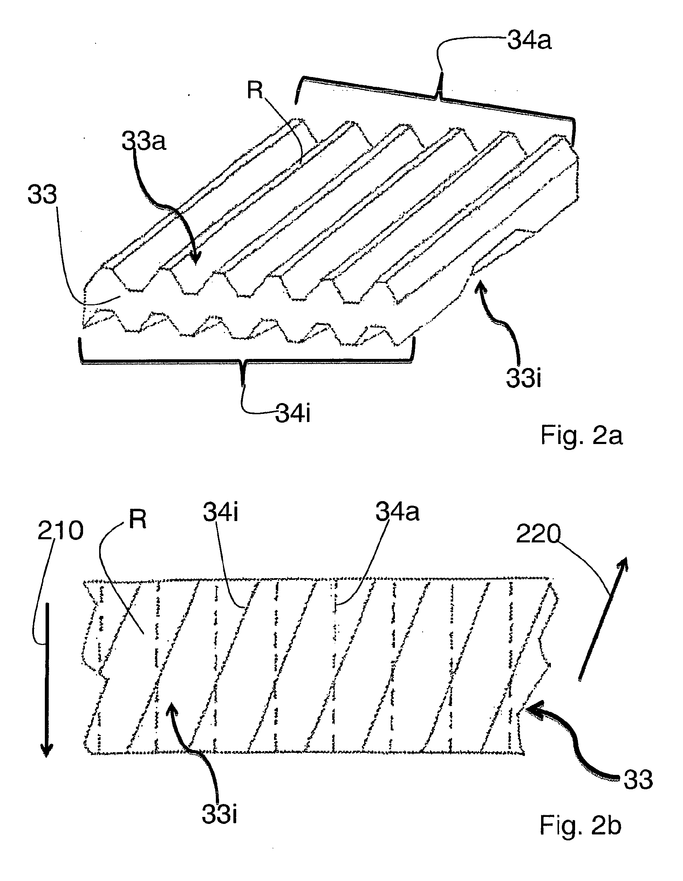

**Figur 2a** zeigt eine perspektivische Ansicht eines Abschnitts eines als Ring 33 ausgebildeten Verbindungselements in abgewickelter Darstellung. Der Ring 33 weist auf einer Außenseite 33a und auf einer Innenseite 33i jeweils eine Bezahnung 34a, 34i auf. Wird der gezeigte Ring 33 als Verbindungselement in der Ausführungsform der Figur 1 eingesetzt, so ist die Außenseite 33a mit dem Elektromotor 11 und die Innenseite 33i mit der Welle 20 in Eingriff. In der gezeigten Darstellung blickt man auf die Außenseite 33a, während die Bezahnung 34i auf der Innenseite 33i nur eingeschränkt zu erkennen ist. Die Bezahnungen sind jeweils durch Rippen R gebildet.

**Figur 2b** zeigt eine Draufsicht auf einen Abschnitt eines als Ring 33 ausgebildeten Verbindungselements in abgewickelter Darstellung. Der gezeigte Abschnitt des Rings 33 entspricht im Wesentlichen dem in Figur 2a gezeigten Abschnitt. Man blickt dabei auf die Innenseite 33i des Rings 33. Der Verlauf der Bezahnung 34a auf der nicht sichtbaren Außenseite ist durch die gestrichelten Linien veranschaulicht. Die Bezahnungen sind jeweils durch Rippen R gebildet. Wird der gezeigte Ring 33 als Verbindungselement in der Ausführungsform der Figur 1 eingesetzt, so ist die Außenseite des Rings 33 mit dem Elektromotor 11 und die Innenseite 33i mit der Welle 20 in Eingriff. Dabei ist dann eine erste Rippenlängsrichtung 210 der Rippen R auf der Außenseite des Rings 33 parallel zu der Längsrichtung 204 der Welle 20, während die zweite Rippenlängsrichtung 220 der Rippen R auf der Innenseite 33i des Rings 33 schräg zu der Längsrichtung 204 der Welle 20 ist.

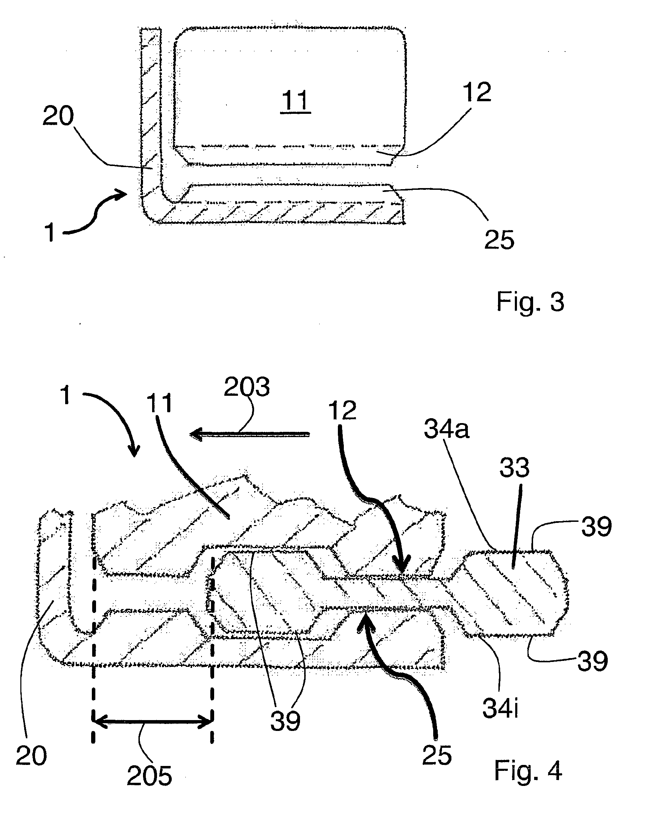

**Figur 3** zeigt einen Längsschnitt durch eine Ausführungsform der erfindungsgemäßen Sicherheitskupplung 1, bei der das Verbindungselement entfernt ist. Am Elektromotor 11 ist eine Bezahnung 12 und an der Welle 20 ist eine Bezahnung 25 ausgebildet. Bei Verwendung eines Rings 33 entsprechend der in den Figuren 2a und 2b gezeigten Ausführungsformen ist die Bezahnung 12 am Elektromotor 11 mit der Bezahnung 34a auf der Außenseite 33a des Rings 33 in Eingriff, und die Bezahnung 25 an der Welle 20 ist mit der Bezahnung 34i auf der Innenseite 33i in Eingriff.

**Figur 4** zeigt eine Ausführungsform der erfindungsgemäßen Sicherheitskupplung 1 mit einer alternativen Ausgestaltung eines als Ring 33 ausgebildeten Verbindungselements. Der Ring 33 weist nur in Teilbereichen 39 Bezahnungen 34a, 34i auf, welchen auf entsprechend ausgebildete Teilbereiche beschränkte Bezahnungen 12, 25 auf Welle 20 und Elektromotor 11 zugeordnet sind. In der Darstellung nimmt der Ring 33 eine Position ein, in welcher eine Drehmomentübertragung zwischen dem Elektromotor 11 und der Welle 20 nicht gegeben ist. Wird der Ring 33 in Richtung des Pfeils 203 verschoben, bis die Bezahnungen 34i, 34a in Eingriff mit der Bezahnung 12 am Elektromotor und der Bezahnung 25 an der Welle sind, so ist eine Drehmomentübertragung zwischen dem Elektromotor 11 und der Welle 20 bewirkbar. Bei dieser Ausgestaltung des Ringes 33 ist die Größe einer Verschiebung 205 des Ringes 33, welche zu einer Unterbrechung der Drehmomentübertragung zwischen Elektromotor 11 und Welle 20 erforderlich ist, geringer als bei einem Ring 33, welcher auf seiner gesamten Außenseite 33a (siehe Figur 2a) und auf seiner gesamten Innenseite 33i (siehe Figur 2b) mit einer Bezahnung 34a, 34i versehen ist.

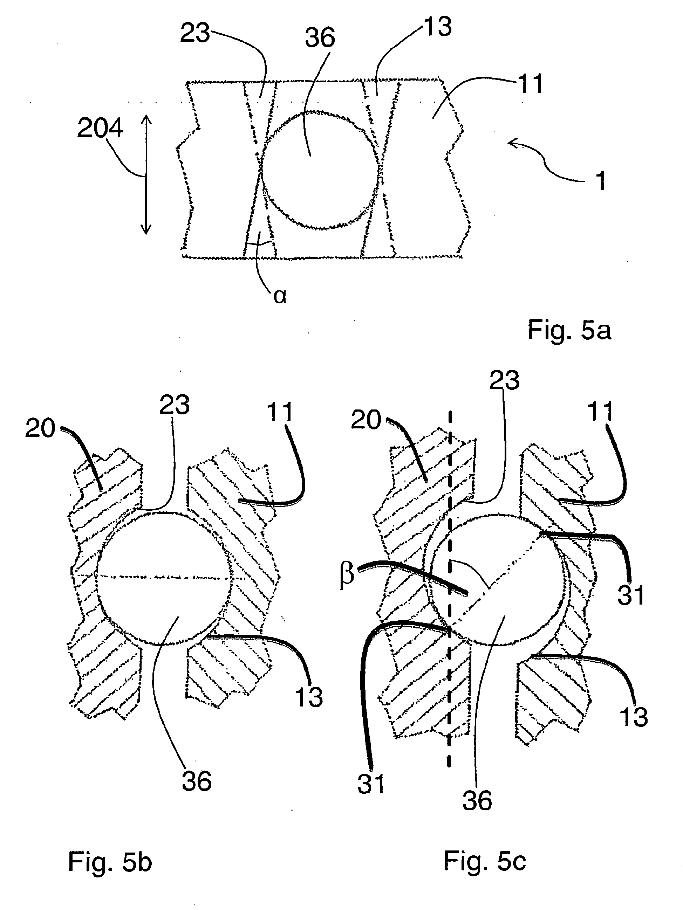

**Figur 5a** zeigt eine Ausführungsform der erfindungsgemäßen Sicherheitskupplung 1, bei der Wälzkörper 36, hier Kugeln, als Verbindungselemente verwendet werden. Die Darstellung der Figur 5a zeigt bei Blickrichtung senkrecht zur Längsrichtung 204 der Welle 20 (siehe Figur 1) mehrere in Blickrichtung aufeinanderfolgende Elemente. Am Elektromotor 11 sind Nuten 13 ausgebildet, welche mit den Wälzkörpern 36 in Eingriff stehen. Die Wälzkörper 36 sind ferner mit Nuten 23 in Eingriff, welche auf der Welle 20 ausgebildet sind. Die Nuten 13 am Elektromotor 11 und die Nuten 23 an der Welle 20 schließen einen Winkel α ein, welcher von Null verschieden ist. Durch die Wälzkörper 36 ist eine Drehmomentübertragung zwischen Elektromotor 11 und Welle 20 bewirkbar. Dabei entsteht aufgrund des Winkels α eine Kraftkomponente auf die Wälzkörper 36 in der Längsrichtung 204 der Welle 20. Durch eine hier nicht gezeigte Verriegelung analog zur Figur 1 wird verhindert, dass die Wälzkörper 36 durch diese Kraftkomponente aus den Nuten 13, 23 gedrängt werden. Analog zur Ausführungsform der Figur 1 kann eine Regelung 100 vorgesehen sein, die beim Erkennen eines Fehlerzustandes die Versetzung der Verriegelung in den entsperrten Zustand herbeiführt.

Es sei ausdrücklich betont, dass neben Kugeln auch andere Wälzkörperformen möglich sind. Ein Beispiel wären zylinderförmige Wälzkörper, die in Nuten mit Rechteckprofil geführt sind, wobei die Mantelflächen der Zylinder in Kontakt mit den Seitenflächen der Nuten 13, 23 sind. In diesem Fall ergäbe sich eine zu Figur 5a analoge Darstellung. Der mit dem Bezugszeichen 36 versehene Kreis stellte dann einen Querschnitt durch einen Zylinder senkrecht zur Zylinderachse dar.

**Figur 5b** zeigt einen Querschnitt durch die in Figur 5a gezeigte Anordnung. In der dargestellten Situation wird kein Drehmoment zwischen Elektromotor 11 und Welle 20 übertragen.

**Figur 5c** entspricht weitgehend der Figur 5b, jedoch ist hier der Fall gezeigt, dass eine Drehmomentübertragung zwischen Elektromotor 11 und Welle 20 gegeben ist. Dabei sind das Profil der Nuten 13, 23 und die Wälzkörper 36 derart aufeinander abgestimmt, dass sich erstens ein gewünschter Druckwinkel β einstellt und zweitens ein Kontakt zwischen Wälzkörper 36 und Nuten 13, 23 auf zwei im Vergleich zur Wälzkörperoberfläche kleine Kontaktbereiche 31 beschränkt ist. Letzteres begünstigt ein störungsfreies Auslaufen der Wälzkörper 36 im entsperrten Zustand einer hier nicht dargestellten Verriegelung.

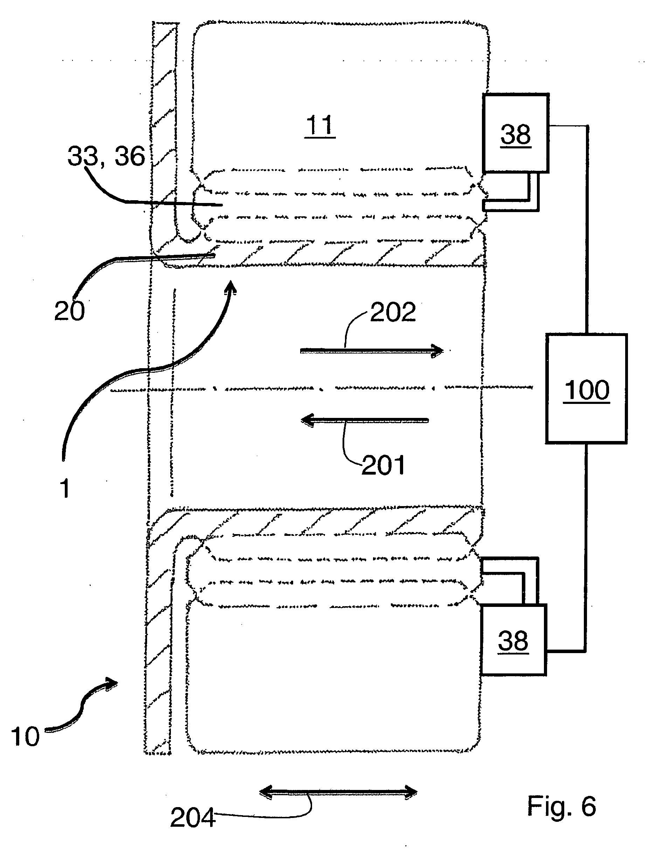

**Figur 6** entspricht weitgehend der Figur 1, wo schon die überwiegende Anzahl der gezeigten Elemente beschrieben worden ist. In der Figur 6 ist jedoch eine Ausführungsform der Erfindung gezeigt, bei der die Verriegelung ein Aktuator 38 ist. Wird von der Regelung 100 in der in Figur 1 beschriebenen Weise ein Fehlerzustand festgestellt, so sendet die Regelung 100 ein Steuersignal an den Aktuator 38, woraufhin der Aktuator 38 das mindestens eine Verbindungselement 33, 36 derart in der zweiten Richtung 202 verschiebt, dass eine Drehmomentübertragung zwischen dem Elektromotor 11 und der Welle 20 unterbrochen wird.

Der Aktuator 38 kann in Ausführungsformen der Erfindung aus einer Vielzahl von Aktuatoreinheiten bestehen, die geeignet in der Sicherheitskupplung 1 angeordnet sind und bei Feststellung eines Fehlerzustandes durch die Regelung 100 von der Regelung 100 angesteuert werden, so dass eine Verschiebung des Verbindungselementes 33, 36 durch die Zusammenwirkung der Vielzahl von Aktuatoreinheiten bewirkt wird.

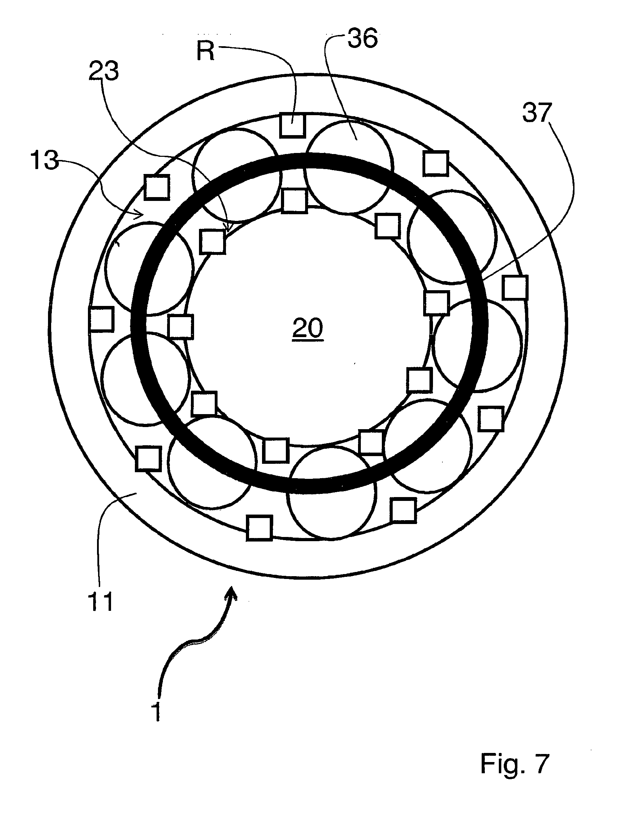

**Figur 7** zeigt einen Querschnitt durch eine erfindungsgemäße Sicherheitskupplung 1. Die Verbindungselemente sind durch Wälzkörper 36 gegeben und durch einen Käfig 37 gehaltert. Ein Käfig 37 für die Wälzkörper 36 ist sowohl im Falle einer Verriegelung durch eine Sperreinrichtung 32 (siehe Figur 1), als auch im Falle einer Verriegelung durch einen Aktuator 38 (siehe Figur 6) einsetzbar. Im Falle der Verriegelung durch einen Aktuator 38 greift dieser, wenn die Drehmomentübertragung zwischen dem Elektromotor 11 und der Welle 20 unterbrochen werden soll, bevorzugt am Käfig 37 an, um die Wälzkörper 36 durch eine Verschiebung des Käfigs 37 zu verschieben. Nur sehr schematisch sind in der Zeichnung Rippen R dargestellt. Durch diese werden in der gezeigten Ausführungsform Nuten 23 an der Welle 20 und Nuten 13 am Elektromotor 11 definiert. Das Profil der Nuten 13, 23 ist in bevorzugten Ausführungsformen der Erfindung auf die Wälzkörper 36 abgestimmt, was aus der schematischen Darstellung der Figur 7 nicht hervorgeht. Ist die Verriegelung durch einen Aktuator 38 gegeben, so verlaufen die Nuten 13 am Elektromotor und die Nuten 23 an der Welle bevorzugt sämtlich in der Längsrichtung 204 (siehe Figur 6) der Welle 20.

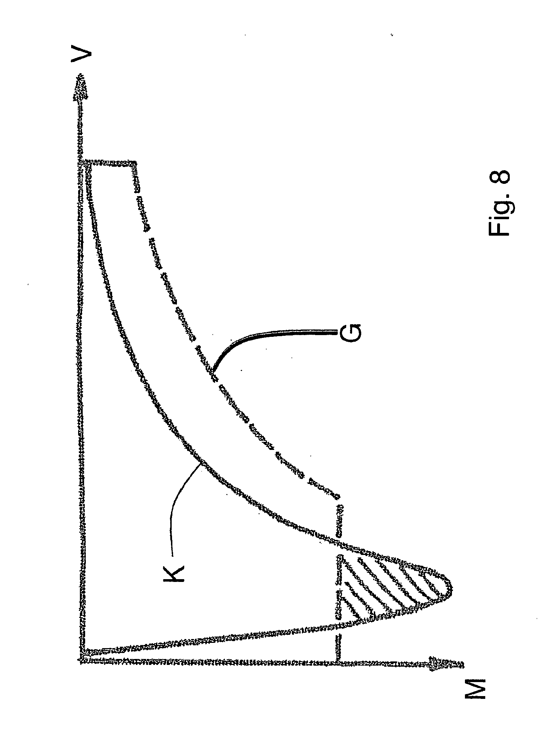

**Figur 8** bezieht sich auf den Einsatz der erfindungsgemäßen Sicherheitskupplung in einem Elektroantrieb für ein Radfahrzeug. Gezeigt sind die Abhängigkeit des Bremsmoments G bei generatorischem Bremsen und des Kurzschlussbremsmoments K, das sich ergibt, wenn im Elektromotor des Elektroantriebs ein Kurzschluss auftritt. V bezeichnet die Fahrzeuggeschwindigkeit. M bezeichnet dabei die Achse, auf der die Bremsmomente aufgetragen sind. Erkennbar übersteigt das Bremsmoment G bei generatorischem Bremsen das Kurzschlussbremsmoment K in weiten Geschwindigkeitsbereichen. Daher kann eine Herbeiführung einer Unterbrechung der Drehmomentübertragung zwischen Elektromotor und Welle durch die Verriegelung der Sicherheitskupplung nicht allein von der Größe der auftretenden Bremsmomente abhängig gemacht werden. Eine Regelung, welche den Fahrzeugzustand mitberücksichtigt, ist somit erforderlich.

Die Erfindung wurde unter Bezugnahme auf bevorzugte Ausführungsformen beschrieben. Es ist jedoch für einen Fachmann selbstverständlich, dass Abwandlungen und Veränderungen vorgenommen werden können, ohne den Schutzbereich der nachstehenden Ansprüche zu verlassen.

## Patentansprüche

1. Sicherheitskupplung (1) für einen Elektroantrieb (10), welcher einen Elektromotor (11) sowie eine durch den Elektromotor (11) antreibbare Welle (20) umfasst, **dadurch gekennzeichnet, dass** mindestens ein Verbindungselement (33,36) vorgesehen ist, durch welches eine Drehmomentübertragung zwischen dem Elektromotor (11) und der Welle (20) bewirkbar ist, und dass dem Verbindungselement (33, 36) eine steuerbare Verriegelung (32,38) zugeordnet ist, durch welche eine Unterbrechung der Drehmomentübertragung zwischen dem Elektromotor (11) und der Welle (20) herbeiführbar ist.

2. Sicherheitskupplung (1) nach Anspruch 1, **wobei** die steuerbare Verriegelung als eine Sperreinrichtung (32) ausgebildet ist, welche sich in einem gesperrten oder in einem entsperrten Zustand befindet, wobei im entsperrten Zustand eine Unterbrechung der Drehmomentübertragung zwischen dem Elektromotor (11) und der Welle (20) durch Zusammenwirkung des mindestens einen Verbindungselements (33, 36) mit der Welle (20) und dem Elektromotor (11) herbeiführbar ist, wohingegen im gesperrten Zustand die Drehmomentübertragung zwischen dem Elektromotor (11) und der Welle (20) durch das Verbindungselement (33,36) gewährleistet ist.

3. Sicherheitskupplung (1) nach Anspruch 2, **wobei** das zumindest eine Verbindungselement ein Ring (33) ist, der zumindest in einem Teilbereich (39) einer Innenseite (33i) des Rings (33) und zumindest in einem Teilbereich (39) einer Außenseite (33a) des Rings (33) jeweils eine Bezahnung (34i, 34a) ausgebildet hat, und wobei die Welle (20) und der Elektromotor (11) jeweils eine Bezahnung (25, 12) aufweisen, derart dass durch die Zusammenwirkung des Rings (33) mit der Welle (20) und dem Elektromotor (11) vermittels der Bezahnungen (12, 34a, 34i, 25) im entsperrten Zustand der Sperreinrichtung (32) eine Unterbrechung der Drehmomentübertragung zwischen dem Elektromotor (11) und der Welle (20) durch eine Verschiebung des Rings (33) bewirkbar ist.

4. Sicherheitskupplung (1) nach Anspruch 3, **wobei** die Bezahnung (34i) auf der Innenseite (33i) und die Bezahnung (34a) auf der Außenseite (33a) durch Rippen (R) gebildet ist, wobei den Rippen (R) auf der Außenseite (33a) eine erste Rippenlängsrichtung (210) gemeinsam ist, und den Rippen (R) auf der Innenseite (33i) eine zweite Rippenlängsrichtung (220) gemeinsam ist, derart, dass die erste Rippenlängsrichtung (210) parallel zu einer Längsrichtung (204) der Welle (20) orientiert ist und die zweite Rippenlängsrichtung (220) schräg zur Längsrichtung (204) der Welle (20) orientiert ist, oder derart, dass die erste Rippenlängsrichtung (210) schräg zu einer Längsrichtung (204) der Welle (20) orientiert ist und die zweite Rippenlängsrichtung (220) parallel zur Längsrichtung (204) der Welle (20) orientiert ist.

5. Sicherheitskupplung (1) nach Anspruch 2, **wobei** die Verbindungselemente durch Wälzkörper (36) gegeben sind, derart, dass ein Wälzkörper (36) jeweils mit einer Nut (13) am Elektromotor (11) und mit einer Nut (23) an der Welle (20) in Eingriff steht, und wobei die beiden mit dem jeweiligen Wälzkörper (36) in Eingriff stehenden Nuten (13, 23) einen von Null verschiedenen Winkel (α) einschließen.

6. Sicherheitskupplung (1) nach Anspruch 5, **wobei** die Wälzkörper (36) durch einen Käfig (37) gehaltert sind.

7. Sicherheitskupplung (1) nach Anspruch 1, wobei die Verriegelung ein Aktuator (38) ist, durch welchen das Verbindungselement (33,36) derart verschiebbar ist, dass eine Drehmomentübertragung zwischen dem Elektromotor (11) und der Welle (20) unterbrechbar ist.

8. Sicherheitskupplung (1) nach Anspruch 7, **wobei** das zumindest eine Verbindungselement ein Ring (33) ist, der zumindest in einem Teilbereich (39) einer Innenseite (33i) des Rings (33) und zumindest in einem Teilbereich (39) einer Außenseite (33a) des Rings (33) jeweils eine Bezahnung (34i, 34a) derart ausgebildet hat, dass in Zusammenwirkung mit einer Bezahnung (25) auf der Welle (20) und einer Bezahnung (12) am Elektromotor (11) eine Drehmomentübertragung zwischen Elektromotor (11) und Welle (20) bewirkbar ist.

9. Sicherheitskupplung (1) nach Anspruch 7, **wobei** die Verbindungselemente in einem Käfig (37) gehalterte Wälzkörper (36) sind, welche mit Nuten (13,23) auf der Welle (20) und am Elektromotor (11) derart in Eingriff stehen, dass eine Drehmomentübertragung zwischen Elektromotor (11) und Welle (20) bewirkbar ist.

10. Verwendung der Sicherheitskupplung (1) nach einem der vorhergehenden Ansprüche beim Antrieb eines Radfahrzeugs, **dadurch gekennzeichnet, dass** eine Regelung (100) das zwischen dem Elektromotor (11) und der Welle (20) übertragene Drehmoment unter Berücksichtigung eines Fahrzeugzustandes bewertet und bei Feststellung eines Fehlerzustands ein enstprechendes Steuersignal an die Verriegelung (32, 38) sendet, so dass die Drehmomentübertragung zwischen dem Elektromotor (11) und der Welle (20) unterbrochen wird.

## Claims

1. Safety clutch (1) for an electric drive (10) which comprises an electric motor (11) and a shaft (20) driveable by the electric motor (11), **characterized in that** at least one connection element (33, 36) is provided, by means of which torque transfer between the electric motor (11) and the shaft (20) can be brought about, and **in that** the connection element (33, 36) is assigned a controllable lock (32, 38), by means of which an interruption in torque transfer between the electric motor (11) and the shaft (20) can be implemented.

2. Safety clutch (1) according to Claim 1, **wherein** the controllable lock is designed as a blocking device (32) which is in a blocked or an unblocked state, and, in the unblocked state, an interruption in torque transfer between the electric motor (11) and the shaft (20) being implementable as a result of the interaction of the at least one connection element (33, 36) with the shaft (20) and the electric motor (11), whereas, in the blocked state, torque transfer between the electric motor (11) and the shaft (20) is ensured by the connection element (33, 36).

3. Safety clutch (1) according to Claim 2, **wherein** the at least one connection element is a ring (33) which has a toothing (34i, 34a) formed on it in each case at least in a sub region (39) of an inner face (33i) of the ring (33) and at least in a sub region (39) of an outer face (33a) of the ring (33), and the shaft (20) and the electric motor (11) having in each case a toothing (25, 12), in such a way that, as a result of the interaction of the ring (33) with the shaft (20) and the electric motor (11) by means of the toothings (12, 34a, 34i, 25), in the unblocked state of the blocking device (32), an interruption in torque transfer between the electric motor (11) and the shaft (20) can be brought about by means of a displacement of the ring (33).

4. Safety clutch (1) according to Claim 3, **wherein** the toothing (34i) on the inner face (33i) and the toothing (34a) on the outer face (33a) are formed by ribs (R), the ribs (R) on the outer face (33a) having in common a first rib longitudinal direction (210), and the ribs (R) on the inner face (33i) having in common a second rib longitudinal direction (220), in such a way that the first rib longitudinal direction (210) is oriented parallel to a longitudinal direction (204) of the shaft (20), and the second rib longitudinal direction (220) is oriented obliquely to the longitudinal direction (204) of the shaft (20), or in such a way that the first rib longitudinal direction (210) is oriented obliquely to a longitudinal direction (204) of the shaft (20) and the second rib longitudinal direction (220) is oriented parallel to the longitudinal direction (204) of the shaft (20).

5. Safety clutch (1) according to Claim 2, **wherein** the connection elements are given by rolling bodies (36), in such a way that a rolling body (36) is in engagement in each case with a groove (13) on the electric motor (11) and with a groove (23) on the shaft (20), and the two grooves (13, 23) which are in engagement with the respective rolling body (36) forming an angle (α) which is different from zero.

6. Safety clutch (1) according to Claim 5, **wherein** the rolling bodies (36) are held by means of a cage (37).

7. Safety clutch (1) according to Claim 1, **wherein** the lock is an actuator (38), by means of which the connection element (33, 36) can be displaced in such a way that torque transfer between the electric motor (11) and the shaft (20) can be interrupted.

8. Safety clutch (1) according to Claim 7, **wherein** the at least one connection element is a ring (33) which has a toothing (34i, 34a) formed on it in each case at least in a sub region (39) of an inner face (33i) of the ring (33) and at least in a sub region (39) of an outer face (33a) of the ring (33), in such a way that, in interaction with a toothing (25) on the shaft (20) and with a toothing (12) on the electric motor (11), torque transfer between the electric motor (11) and shaft (20) can be brought about.

9. Safety clutch (1) according to Claim 7, **wherein** the connection elements are rolling bodies (36) which are held in a cage (37) and which are in engagement with the grooves (13, 23) on the shaft (20) and on the electric motor (11) in such a way that torque transfer between the electric motor (11) and shaft (20) can be brought about.

10. Use of the safety clutch (1) according to one of the preceding claims in the drive of a wheeled vehicle, **characterized in that** a control unit (100) evaluates the torque transferred between the electric motor (11) and the shaft (20), at the same time taking into account a vehicle state, and, if a fault state is found, sends a corresponding control signal to the lock (32, 38), so that torque transfer between the electric motor (11) and the shaft (20) is interrupted.

## Revendications

1. Embrayage de sécurité (1) pour un entraînement électrique (10) comprenant un moteur électrique (11) ainsi qu'un arbre (20) pouvant être entraîné par le moteur électrique (11), **caractérisé en ce qu'**au moins un élément de liaison (33, 36) est prévu à travers lequel une transmission de couple de rotation peut être occasionnée entre le moteur électrique (11) et l'arbre (20) et qu'un verrouillage commandable (32, 38) est associé à l'élément de liaison (33, 36), une interruption de la transmission de couple de rotation entre le moteur électrique (11) et l'arbre (20) pouvant être provoquée par le biais dudit verrouillage.

2. Embrayage de sécurité (1) selon la revendication 1, le verrouillage commandable prenant la forme d'un dispositif de blocage (32) se trouvant dans un état bloqué ou débloqué, une interruption de la transmission de couple de rotation entre le moteur électrique (11) et l'arbre (20) étant provoquée dans l'état débloqué par interaction de l'au moins un élément de liaison (33, 36) avec l'arbre (20) et le moteur électrique (11), tandis que dans l'état bloqué, la transmission de couple de rotation est garantie entre le moteur électrique (11) et l'arbre (20) du fait de l'élément de liaison (33, 36).

3. Embrayage de sécurité (1) selon la revendication 2, l'au moins un élément de liaison étant une bague (33) comportant respectivement, au moins dans une zone partielle (39) d'un côté intérieur (33i) de la bague (33) et au moins dans une zone partielle (39) d'un côté extérieur (33a) de la bague (33), un endentement (34i, 34a) et l'arbre (20) et le moteur électrique (11) comportant respectivement un endentement (25, 12), de telle sorte que l'interaction de la bague (33) avec l'arbre (20) et le moteur électrique (11) à l'aide des endentements (12, 34a, 34i, 25) peut provoquer, dans l'état débloqué du dispositif de blocage (32), une interruption de la transmission de couple de rotation entre le moteur électrique (11) et l'arbre (20) par déplacement de la bague (33).

4. Embrayage de sécurité (1) selon la revendication 3, l'endentement (34i) étant formé sur le côté intérieur (33i) et l'endentement (34a) étant formé sur le côté extérieur (33a) par des nervures (R), une première direction longitudinale de nervure (210) étant commune aux nervures (R) placées sur le côté extérieur (33a) et une deuxième direction longitudinale de nervure (220) étant commune aux nervures (R) placées sur le côté intérieur (33i), de telle sorte que la première direction longitudinale de nervure (210) est orientée parallèlement à une direction longitudinale (204) de l'arbre (20) et que la deuxième direction longitudinale de nervure (220) est orientée de façon inclinée par rapport à la direction longitudinale (204) de l'arbre (20) ou de telle sorte que la première direction longitudinale de nervure (210) est orientée de façon inclinée par rapport à une direction longitudinale (204) de l'arbre (20) et que la deuxième direction longitudinale de nervure (220) est orientée parallèlement à la direction longitudinale (204) de l'arbre (20).

5. Embrayage de sécurité (1) selon la revendication 2, les éléments de liaison étant donnés par les corps de rouleau (36), de telle sorte qu'un corps de rouleau (36) est respectivement en prise avec une rainure (13) prévue au niveau du moteur électrique (11) et avec une rainure (23) prévue au niveau de l'arbre (20) et les deux rainures (13, 23) étant en prise avec le corps de rouleau (36) respectif formant un angle (α) différent de zéro.

6. Embrayage de sécurité (1) selon la revendication 5, les corps de rouleau (36) étant maintenus à travers une cage (37).

7. Embrayage de sécurité (1) selon la revendication 1, le verrouillage étant un actionneur (38) à travers lequel l'élément de liaison (33, 36) peut être déplacé de telle sorte qu'une transmission de couple de rotation peut être interrompue entre le moteur électrique (11) et l'arbre (20).

8. Embrayage de sécurité (1) selon la revendication 7, l'au moins un élément de liaison étant une bague (33) comprenant respectivement, au moins dans une zone partielle (39) d'un côté intérieur (33i) de la bague (33) et au moins dans une zone partielle (39) d'un côté extérieur (33a) de la bague (33), un endentement (34i, 34a) réalisé de telle sorte qu'une transmission de couple de rotation peut être provoquée entre le moteur électrique (11) et l'arbre (20) en interaction avec un endentement (25) prévu sur l'arbre (20) et avec un endentement (12) prévu au niveau du moteur électrique (11).

9. Embrayage de sécurité (1) selon la revendication 7, les éléments de liaison étant des corps de rouleau (36) maintenus dans une cage (37) en prise avec les rainures (13, 23) placées sur l'arbre (20) et au niveau du moteur électrique (11) de telle sorte qu'une transmission de couple de rotation peut être provoquée entre le moteur électrique (11) et l'arbre (20).

10. Utilisation de l'embrayage de sécurité (1) selon l'une quelconque des revendications précédentes pour un entraînement d'un véhicule sur roues, **caractérisée en ce qu'**un réglage (100) analyse le couple de rotation transmis entre le moteur électrique (11) et l'arbre (20) en tenant compte d'un état du véhicule et qu'en cas de détection d'un état anormal, un signal de commande correspondant est envoyé au verrouillage (32, 38), de façon à interrompre la transmission de couple de rotation entre le moteur électrique (11) et l'arbre (20).
